# FASCICULE DE BREVET EUROPEEN

(11) **EP 0 436 714 B1**
(45) Date de publication et mention de la délivrance du brevet: **12.10.1994**
(21) Numéro de dépôt: 90912671.6
(22) Date de dépôt: 31.07.1990
(51) Int. Cl.: H04B 7/216

(54) **SYSTEME DE COMMUNICATIONS A ACCES MULTIPLE PAR REPARTITION A CODES AVEC PORTEUSE ACTIVEE PAR LA VOIX DE L'USAGER ET SYNCHRONISATION PAR CODE**
KODE-MULTIPLEX-VIELFACHZUGRIFFSYSTEM MIT DURCH TEILNEHMERSTIMME AKTIVIERTEM TRÄGER UND KODE-SYNCHRONISATION
CODE DISTRIBUTION MULTIPLE ACCESS COMMUNICATION SYSTEM WITH USER VOICE ACTIVATED CARRIER AND CODE SYNCHRONIZATION

(30) Priorité: 03.08.1989 FR 8910481
(43) Date de publication de la demande: 17.07.1991
(73) Titulaire: AGENCE SPATIALE EUROPEENNE, F-75738 Paris Cedex 15 (FR)
(72) Inventeur: DE GAUDENZI, Riccardo, NL-Leiderdorp (NL); VIOLA, Roberto, NL-Oegstgeest (NL)
(74) Mandataire: Vanderperre, Robert
(86) Numéro de dépôt international: EP9001276
(87) Numéro de publication internationale: WO9102415

(56) Documents cités:
- DE-A- 2 259 359
- Proceedings of Mobile Satellite Conference, Pasadena, CA, US, 3-5 mai 1988, I.M. Jacobs et al.: "Comparison of CDMA and FDMA for the mobilestar system ", pages 303-308

## Description

La présente invention concerne un système de communications à accès multiple par répartition à codes dans lequel la porteuse de transmission est activée par la voix de l'usager.

La bande de fréquences disponible pour les communications mobiles par satellite est limitée de sorte que le nombre de canaux disponibles pour assurer le service est insuffisant pour desservir l'ensemble des usagers potentiels. Le problème principal pour la mise en service d'un système de communications est dès lors l'efficacité du système en terme de capacité d'informations transmises en fonction de la largeur de bande de fréquences pour un rapport signal-bruit donné.

Un système de communications à accès multiple par répartition à codes permet de transmettre des données dans une largeur de bande limitée. Dans un tel système de communications les signaux de chaque usager sont codés à l'aide d'un code propre. DE-A-2259359 propose un système de communications de ce genre dans lequel, pour réduire la largeur de bande de transmission et réduire le bruit produit dans les récepteurs par les porteuses indésirables la puissance de transmission des porteuses est réduite pendant les intervalles de pause.

Bien que présentant des avantages intéressants, le système de communications à accès multiple par répartition à codes n'a été utilisé jusqu'à présent dans les communications mobiles par satellite que pour transmettre des données et cela en raison du long temps d'acquisition et de la faible efficacité de ce système.

Il a été proposé récemment d'améliorer le rendement des canaux de communication d'un système de communications mobiles à accès multiple par répartition à codes en utilisant la technique d'activation de la porteuse par la voix de l'usager, cette technique ayant pour effet de réduire le nombre moyen d'usagers simultanément en communication et partant de réduire les interférences entre voies de communication ("Comparison of CDMA and FDMA for the Mobilestar System" par I.M. Jacobs et al, Proceedings of the Mobile Satellite Conference, Pasadena, California, May 3-5, 1988). Ce document expose les avantages théoriques de la technique proposée mais il n'indique pas comment le système peut fonctionner pas plus qu'il ne décrit de solution pour pouvoir exploiter un tel système en mode non-continu de manière à maintenir le temps d'acquisition d'un spectre étalé à une valeur compatible avec les besoins des communications téléphoniques en temps réel. Le document précité n'apporte pas non plus de solution pour contrôler la congestion du trafic.

Le but de la présente invention est de résoudre ces problèmes pratiques et d'améliorer l'efficacité d'un système de communications à accès multiple par répartition à codes de manière à permettre de transmettre non seulement des données mais également des messages téléphoniques par satellite.

Conformément à l'invention il est maintenant proposé un procédé pour assurer la synchronisation entre un terminal d'usager et une station pilote dans un système de communications par satellite à accès multiple par répartition à codes avec une porteuse activée par la voix de l'usager du terminal, procédé suivant lequel la synchronisation dans la liaison aller est obtenue par la transmission d'un code pilote sans interruption à partir de la station pilote avec une puissance plus élevée que celle des signaux dans la liaison retour, le code pilote étant transmis avec la même fréquence d'horloge et la même porteuse que les signaux de communication. La synchronisation dans la liaison retour est obtenue par la transmission d'un signal à partir du terminal d'usager pendant les pauses de la voix de l'usager, le signal de synchronisation étant transmis par l'activation forcée de la porteuse de transmission lorsqu'une pause dépasse un laps de temps prédéterminé, ladite activation forcée de la porteuse étant commandée par un code d'usager déduit par décodage du code pilote reçu de la station pilote.

La voix de l'usager est comprimée par un processeur de voix et subdivisé en deux flux de données conformément au principe de codage hiérarchique.

La présente invention a également pour objet un système de communications par satellite à accès multiple par répartition à codes, dans lequel chaque terminal d'usager comprend un dispositif d'acquisition et de poursuite de code agencé pour recevoir le code pilote et commander un générateur de codes qui est agencé pour produire une réplique locale du code d'usager utilisé pour la liaison à établir.

La présente invention résout les problèmes de la synchronisation dans les systèmes de communications par satellite en utilisant la technique d'activation de la porteuse de transmission par la voix de l'usager. La probabilité de blocage se trouve réduite grâce à l'intégration d'un codage hiérarchique moyennant un accroissement minimum de la complexité du terminal mobile. L'avantage de l'invention est qu'elle résout les problèmes de synchronisation posés par l'utilisation de l'activation par la voix dans un système de communications à accès multiple par répartition à codes, et cela moyennant un équipement complémentaire réduit. Grâce à la solution proposée, l'invention permet d'exploiter un système de communications mobiles par satellite avec un meilleur rendement, un moindre niveau d'interférence et une meilleure qualité de service qu'un système équivalent à accès multiple par répartition de fréquence.

L'invention s'applique non seulement à un système de communications mobiles mais également à tout système de communications dans lesquels se pose un problème de synchronisation. On peut citer, par exemple, un système de relais par satellite et un système de communications par satellite utilisant des petits terminaux fixes. Dans de tels systèmes, le procédé de synchronisation au moyen d'un code pilote comme proposé par la présente invention permet de réduire considérablement le temps d'acquisition dans les circuits de réception des signaux de données, conduisant ainsi à une augmentation du rendement du système.

L'invention est exposée plus en détail dans ce qui suit à l'aide des dessins ci-annexés.

La figure 1 est un schéma par blocs d'un terminal de communications selon l'invention.

La figure 2 est un schéma par blocs d'une station pilote terrienne selon l'invention.

La figure 3 est un graphique illustrant le procédé d'activation de la porteuse par la voix de l'usager d'un terminal de communications.

La figure 4 illustre graphiquement le fonctionnement du procédé d'acquisition et de poursuite de code selon l'invention.

### Description générale d'un mode de réalisation exemplaire

Le système de communications décrit dans ce qui suit à titre exemplaire est un réseau mobile utilisant un transpondeur à bord d'un satellite transparent et ayant accès au réseau terrien par l'intermédiaire d'une station pilote centralisée. L'accès se fait dans les deux sens par accès multiple par répartition à codes.

Chaque terminal de communications mobile a la possibilité de transmettre et de recevoir des informations numériques comprimées (messages téléphoniques, données, signalisation). A chaque terminal sont alloués deux codes d'usager (codes PN) : un code pour le canal I et un code pour le canal Q. Le code pour le canal en quadrature de phase est retardé d'une demi-période de code par rapport au code pour le canal,en phase afin d'éviter les problèmes liés à la corrélation partielle entre les signaux des canaux I et Q dans le démodulateur.

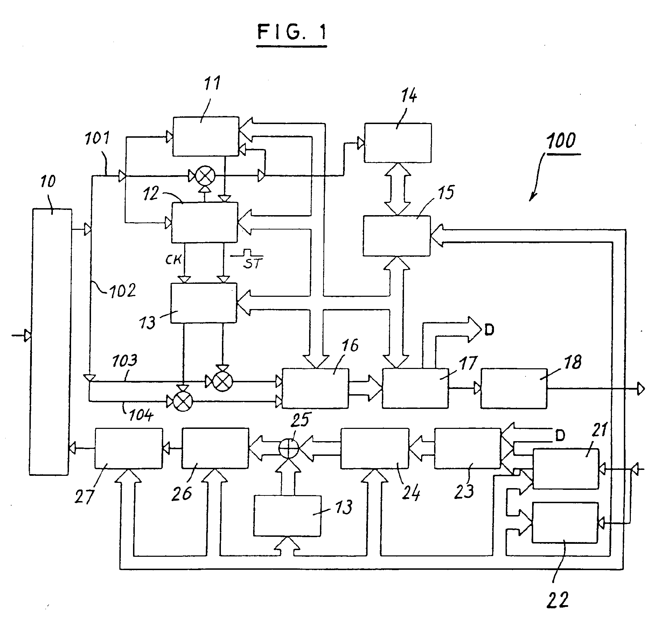

Dans chaque terminal de communications, les signaux représentant la voix de l'usager sont comprimés par un processeur de voix et subdivisés en deux flux de données conformément au principe de codage hiérarchique connu (voir "Variable Rate Speech Coder Matching the Needs of Traffic Reconfigurability" par R. Viola and P. Mandarini, Proceedings of the 36th Congress of the International Astronautical Federation, Stockholm, Sweden, October 7-12, 1985). Suivant ce procédé, un premier flux de données contient les paramètres de base de la voix et le second flux de données transmet des données qui améliorent la qualité de la voix. Ce procédé n'avait pas encore été mis en oeuvre dans un système à spectre étalé. La subdivision en deux flux de données codés dans un tel système confère à la station pilote la possibilité de diminuer la probabilité de blocage et de contrôler le niveau d'interférence en réduisant le nombre de codes actifs, c'est-à-dire en allouant un code unique à un nombre déterminé d'usagers. Un schéma par blocs d'un terminal d'usager selon l'invention est donné à la figure 1. Chaque terminal comprend les circuits de modulation et de démodulation classiques mais, suivant un aspect de l'invention, la porteuse de transmission est activée par la voix de l'usager, c'est-à-dire que la porteuse se trouve interrompue pendant les pauses de la parole. Cela réduit le niveau d'interférence sur la liaison.

Le circuit de transmission comprend un dispositif 21 ayant pour tâche non seulement de comprimer les signaux de parole à transmettre mais également de détecter l'activité de la voix de l'usager. Un vocodeur dit hybride convient particulièrement à cette tâche. L'objectif en ceci est de favoriser la description de la source vocale avec un ensemble de paramètres donnant une meilleure représentation du signal de parole examiné. Cette technique est basée sur les travaux de B.S. Atal et J.R. Remde (A New Model for LPC Excitation for Producing Natural Sounding Speech at Low Bit Rates, Proceedings IEEE ICASP 1982, pages 614-617).

Les signaux à fréquences vocales sont d'abord convertis en signal numérique dans le vocodeur 21 à l'aide du circuit de reconnaissance de voix 22. Le circuit de retard 23 à la sortie du vocodeur 21 sert à introduire un retard adéquat pour compenser le délai qui est nécessaire au circuit de reconnaissance de voix 22 pour reconnaître la parole. Le signal numérique est codé avec convolution dans le codeur 24 qui produit les trains de bits I et Q. Ces trains de bits sont additionnés logiquement avec les codes PN respectifs dans le circuit logique 25, puis ils sont utilisés dans le modulateur 26 pour moduler la porteuse. Un commutateur numérique 27 commandé par le circuit de reconnaissance de voix 22 interrompt le signal modulé pendant les intervalles de pause du message. Cependant, on le verra plus loin, lorsqu'une pause trop longue apparaît, par exemple une pause de plus de quatre secondes environ, une activation forcée de la porteuse est effectuée dans le modulateur 26 pendant un intervalle de temps suffisant pour permettre le blocage du démodulateur dans la station pilote. Les signaux codés et modulés sont dirigés vers une antenne de transmission par l'intermédiaire de l'interface 10.

Le circuit de réception du terminal d'usager 100 comprend un démodulateur 16, un décodeur 17 et un convertisseur numérique/analogique 18 ainsi que, suivant l'invention, un circuit d'acquisition de code 11-14 servant à la synchronisation comme il est décrit ci-après. L'ensemble du fonctionnement du terminal d'usager est géré par un processeur central 15.

### Synchronisation

Le problème de la synchronisation en liaison avec l'activation par la voix de l'usager est résolu, selon l'invention, de façons différentes dans la liaison aller et dans la liaison retour.

Dans la liaison aller, la station pilote transmet sans interruption un code pilote à tous les terminaux de communications 100. Le code pilote MC est transmis avec la même fréquence d'horloge et la même fréquence porteuse que le signal utile. Le code pilote est transmis sans interruption avec une puissance plus élevée que celle des signaux dans la liaison retour. Ce code pilote se compose d'une porteuse à faible cadence de données, qui est étalée par un code ayant la même longueur et le même débit de code que les codes PN des terminaux de communications mais qui leur est orthogonal. Le message contient les informations générales sur les états du système (par exemple les codes PN disponibles).

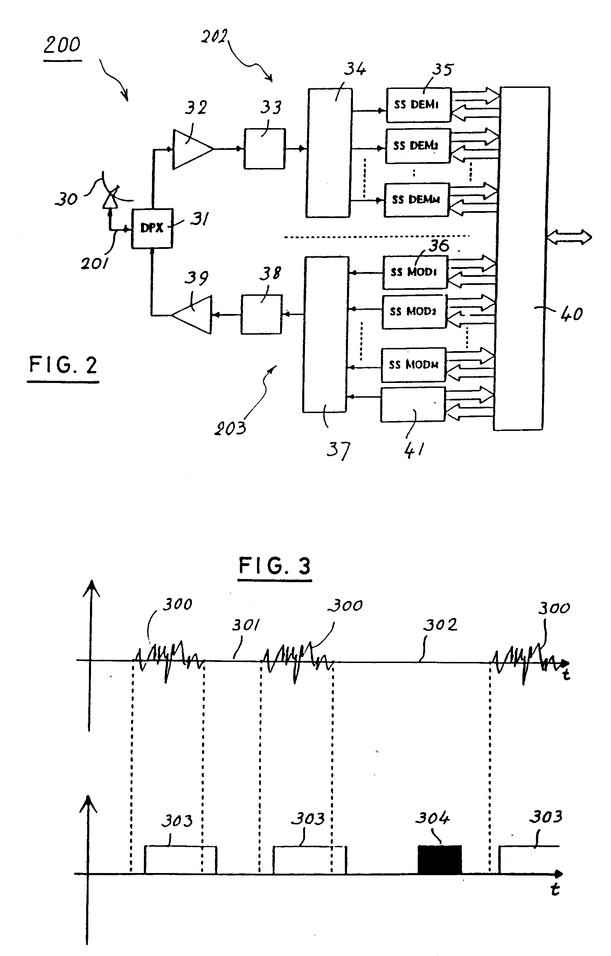

Un schéma par blocs de la station pilote est donné à la figure 2. L'antenne 30 est connectée par une ligne bidirectionnelle 201 à un diplexeur 31 servant à séparer les signaux reçus des signaux transmis. Le circuit de réception 202 comprend un amplificateur 32 suivi d'un convertisseur 33 transposant les signaux de la bande des radiofréquences RF dans la bande de fréquences intermédiaire IF. Le signal IF est ensuite divisé dans un diviseur 34 pour être appliqué aux différents démodulateurs 35. Ceux-ci ne diffèrent l'un de l'autre que par le code PN qu'ils poursuivent. Le signal démodulé est envoyé à un processeur central 40 qui exécute toutes les tâches de gestion des communications.

Le circuit de transmission 202, comprend plusieurs modulateurs 36 qui se distinguent l'un de l'autre par le fait qu'ils utilisent un code PN différent. Un modulateur pilote 41 sert à l'envoi du code pilote MC. Les différents signaux modulés sont combinés dans un combinateur 37 puis transposés dans la bande de fréquences radioélectriques RF par un convertisseur 38. Après amplification dans un amplificateur 39, le signal RF est envoyé à l'antenne 20 par l'intermédiaire du diplexeur 31.

Comme la fréquence porteuse et le trajet aller du code pilote sont les mêmes que ceux du signal activé par la voix de l'usager, le retard et l'effet Doppler qui affectent les deux signaux sont également les mêmes.

Pour réaliser la synchronisation recherchée, l'invention propose de prévoir dans chaque terminal d'usager, un système d'acquisition et de poursuite de code que l'on décrit ci-après en se reportant à nouveau à la figure 1. Chaque terminal 100 étant supposé réglé de façon continue sur le code pilote MC transmis en permanence par la station pilote, la sortie de l'interface 10 délivre le signal à fréquence intermédiaire IF qui contient les signaux commutés par le satellite et le code pilote MC. Celui-ci est dérivé par la ligne 101 vers le circuit d'acquisition 11 et transféré dans la boucle de poursuite du code pilote 12 qui en extrait les impulsions de temps CK et l'impulsion de début ST. Les impulsions CK et ST commandent le générateur de réplique de codes d'usager 13 qui génère une réplique synchrone des codes d'usager PN pour les canaux de communication I et Q. Ces codes PN servent, de façon connue en soi, à comprimer le signal IF reçu sur les lignes 102, 103 et 104 avant son introduction dans le démodulateur 16 pour la reproduction binaire. Le train de bits reconstitué est appliqué au décodeur 17. Une sortie de celui-ci délivre les signaux téléphoniques qui sont introduits dans le convertisseur numérique/analogique 18 à la sortie duquel sont obtenus les signaux à fréquences vocales. Une autre sortie du décodeur 17 délivre les signaux de données DATA.

Grâce à la boucle de poursuite du code pilote prévue dans le terminal d'usager, la réplique synchrone des codes d'usager PN se trouve générée dans le terminal d'usager sans nécessiter un sous-système d'acquisition et de poursuite spécial. Les mêmes considérations s'appliquent à la porteuse qui est fournie au démodulateur par une boucle de Costas. Un simple décomprimeur et un générateur de réplique de code apportent une solution à ce problème. De plus, le système peut être conçu avec une plus grande marge de tolérance pour le code pilote par rapport au signal téléphonique. De cette façon il est possible de maintenir le terminal d'usager synchronisé même en présence de sérieuses conditions d'évanouissement. Le message peut être partiellement perturbé par un évanouissement profond, mais le rétablissement du démodulateur n'est plus retardé par le temps de resynchronisation.

Malheureusement, le code pilote, qui assure la synchronisation dans la liaison aller, ne peut être utilisé pour assurer la synchronisation dans la liaison retour en raison de la topologie décentralisée du réseau. La solution proposée par l'invention pour la liaison retour est basée sur une activation forcée de la porteuse lorsqu'une longue pause apparaît, afin d'éviter de trop longues pauses entre des éléments de parole consécutifs et éviter ainsi un accroissement considérable du temps d'acquisition du signal dans la station pilote terrienne.

Le procédé d'activation forcée de la porteuse selon l'invention est illustré par le graphique de la figure 3. Le diagramme A montre trois éléments de parole 300 consécutifs d'un usager, lesquels éléments de parole sont séparés par des pauses exemplaires 301 et 302. La pause 301 est supposée plus courte qu'un intervalle de temps prédéterminé, par exemple quatre secondes, la pause 302 est supposée plus longue que ledit intervalle de temps prédéterminé. Le diagramme B représente en 303 le signal de sortie du dispositif de reconnaissance de voix 22 (figure 1), lequel signal apparaît lorsqu'un élément de parole 300 a été détecté. Comme décrit plus haut, les signaux 303 activent la porteuse et cette activation est interrompue pendant les pauses normales de la parole (par exemple la pause 301). Cependant, lorsqu'une pause dépasse un laps de temps prédéterminé (par exemple quatre secondes en l'occurrence), une activation forcée de la porteuse est effectuée dès que ledit laps de temps prédéterminé est atteint. C'est ce que représente le signal 304 pendant la pause 302. Cette activation forcée est maintenue pendant un certain temps suffisant pour permettre le blocage du démodulateur dans la station pilote. L'activation forcée de la porteuse est commandée et contrôlée par le processeur central 15 du terminal d'usager.

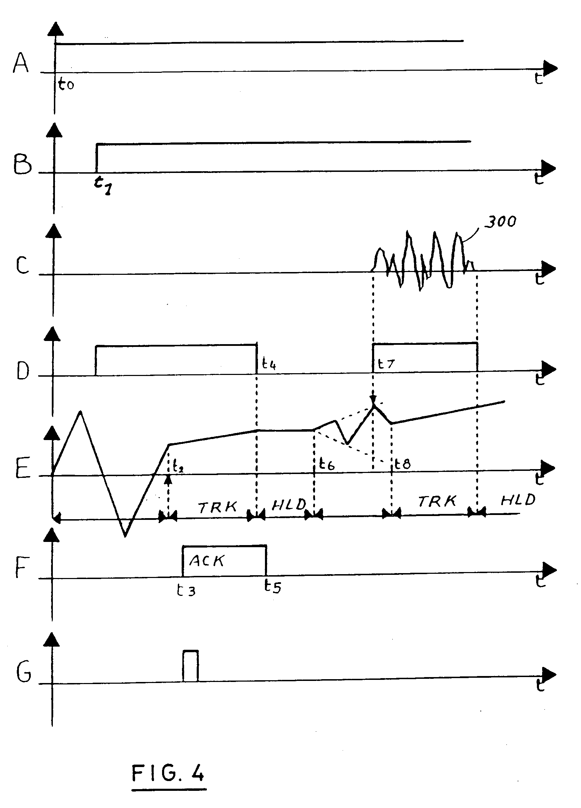

Le processus de synchronisation mis en oeuvre pour la liaison retour est décrit ci-après à l'aide de la figure 4.

Au temps t0, le terminal d'usager est supposé en attente et synchronisé sur le code pilote MC reçu en permanence (diagramme A).

Au temps t1, le terminal d'usager se trouve activé (diagramme B) soit parce qu'un appel est reçu, soit parce que l'usager du terminal désire transmettre un appel. La porteuse est alors activée (diagramme D) à l'aide de l'un des codes PN disponibles à ce moment (code PNj). Ce code PNj est déduit dans le terminal par décodage du message contenu dans le code pilote MC reçu. Le démodulateur correspondant au code PNj balaie en continu la bande complète des fréquences Doppler attendues pour trouver l'incertitude de retard.

Au temps t2 (diagramme E) prend fin la phase d'acquisition du code d'usager PN et la boucle de poursuite du code PN dans le démodulateur j dans la station pilote confirme que le démodulateur est bloqué pour que le message de l'usager puisse être décodé à la station pilote. La requête d'utiliser le code PNj est alors acceptée. Au temps t3 la station pilote envoie un accusé de réception ACK (diagramme F) au terminal d'usager par activation de la liaison aller avec le code d'usager PNj.

Au terme de cet échange préliminaire de messages entre le terminal d'usager et la station pilote, qui constitue la phase de poursuite TRK (diagramme E), la porteuse de la liaison retour est désactivée au temps t4 (diagramme D) et par conséquent la porteuse de la liaison aller est désactivée au temps t5 (diagramme F). A partir de cet instant, l'usager dispose d'une liaison bidirectionnelle pour la transmission et la réception téléphonique (diagramme G).

La boucle de poursuite de code PN est maintenue sur la dernière mesure de retard valable pendant un laps de temps n'excédant pas un intervalle prescrit HLD (diagramme E). Si aucun signal n'est détecté à la station pilote pendant l'intervalle prescrit HLD (cas illustré par la figure 4), un processus de recherche démarre au temps t6. L'étendue de la recherche augmente linéairement avec le temps. La pente est calculée en considérant la variation maximale de l'accroissement de retard du mobile.

Au temps t7 se produit un élément de parole 300 (diagramme C) qui active de nouveau la porteuse pour la liaison retour (diagramme E).

Au temps t8 (diagramme E) la station pilote se trouve de nouveau bloquée pour poursuivre et démoduler le message de l'usager jusqu'à ce que la liaison retour soit déconnectée pendant la pause suivante.

La phase de maintien HLD (diagramme E) se trouve redémarrée avec la même séquence d'événements que décrit ci-avant. Dans le cas où aucun blocage n'intervient après un laps de temps prédéterminé basé sur le temps imparti pour l'activation forcée, le démodulateur de la station pilote considère la conversation comme terminée et le processeur central 40 de la station pilote signale que le code PNj est de nouveau disponible pour d'autres usagers et un processus de recherche est redémarré.

## Revendications

1. Procédé pour assurer la synchronisation entre un terminal d'usager et une station pilote dans un système de communications par satellite à accès multiple par répartition à codes avec une porteuse activée par la voix de l'usager du terminal, caractérisé en ce que la synchronisation dans la liaison aller est obtenue par la transmission d'un code pilote (MC) sans interruption à partir de la station pilote avec une puissance plus élevée que celle des signaux dans la liaison retour, le code pilote (MC) étant transmis avec la même fréquence d'horloge et la même porteuse que les signaux de communication, et en ce que la synchronisation dans la liaison retour est obtenue par la transmission d'un signal à partir du terminal d'usager pendant les pauses de la voix de l'usager, le signal de synchronisation étant transmis par l'activation forcée de la porteuse de transmission lorsqu'une pause dépasse un laps de temps prédéterminé, ladite activation forcée de la porteuse étant commandée par un code d'usager (PN) déduit par décodage du code pilote (MC) reçu de la station pilote.

2. Procédé selon la revendication 1, caractérisé en ce que la voix de l'usager est comprimée par un processeur de voix (21) et subdivisée en deux flux de données conformément au principe de codage hiérarchique.

3. Système de communications par satellite à accès multiple par répartition à codes, comprenant une station pilote centralisée terrienne (200) et des terminaux d'usagers (100), lesdits terminaux comprenant des circuits de modulation (26) et de démodulation (16), caractérisé en ce que la station pilote centralisée (200) comprend un processeur central (40) organisé pour gérer la répartition des codes d'usagers (PN) entre les différents terminaux d'usagers, ledit processeur central contrôlant en outre la transmission d'un code pilote (MC) à tous les terminaux (100), et en ce que chaque terminal d'usager comprend également un commutateur numérique (27) commandé par un circuit de reconnaissance de voix (22) qui active la porteuse des signaux téléphoniques par la voix de l'usager et qui interrompt le signal modulé pendant les intervalles de pause du message et un dispositif d'acquisition et de poursuite de code (11, 12) pour recevoir le code pilote (MC) et commander un générateur de codes (13) pour produire une réplique du code d'usager (PN) utilisé pour la liaison.

4. Système suivant la revendication 3, caractérisé en ce que chaque terminal d'usager (100) comprend un processeur de voix (21) pour comprimer la voix de l'usager et la subdiviser en deux flux de données conformément au principe de codage hiérarchique.

## Patentansprüche

1. Verfahren zum Sicherstellen der Synchronisation zwischen einem Teilnehmerterminal und einer Steuerstation in einem Kode-Multiplex-Vielfachzugriffsystem für Satellitenkommunikation mit einem durch die Stimme des Teilnehmers des Terminals aktiviertem Träger, dadurch gekennzeichnet, daß die Synchronisation der Verbindung Bodenstation-Satellit-Empfänger durch die Übertragung eines Steuerkodes (MC) ohne Unterbrechung ausgehend von der Steuerstation mit einer gegenüber der Leistung der Signale der Verbindung in der Gegenrichtung stark erhöhten Leistung, wobei der Steuerkode (MC) durch dieselbe Taktfrequenz und denselben Träger wie die Kommunikationssignale übertragen wird, und daß die Synchronisation in der Verbindung in der Gegenrichtung durch die Übertragung eines Signals ausgehend von dem Teilnehmerterminal während der Sprechpausen des Teilnehmers erhalten wird, wobei das Synchronisationssignal durch erzwungene Aktivierung des Übertragungsträgers übertragen wird, wenn eine Pause eine vorbestimmte verstrichene Zeit übersteigt, wobei die erzwungene Aktivierung des Trägers durch einen Teilnehmerkode (PN) gesteuert wird, welcher durch eine Entschlüsselung des Steuerkodes (MC), welcher von der Steuerstation erhalten wurde, abgeleitet wird.

2. Verfahren nach Anspruch 1, dadurch gekennzeichnet, daß die Stimme des Teilnehmers durch einen Sprachprozessor (21) komprimiert wird und in zwei Richtwertströme entsprechend dem hierarchischen Prinzip der Kodierung unterteilt wird.

3. Kode-Multiplex-Vielfachzugriffssystem für Satellitenkommunikation, umfassend eine zentralisierte Bodensteuerstation (200) und Teilnehmerterminals (100), wobei diese Terminals Modulations-(26) und Demodulations-(16)-Schaltungen umfassen, dadurch gekennzeichnet, daß die zentralisierte Steuerstation (200) einen zentralen Prozessor (40), welcher für ein Verwalten des Zugriffes der Kodes der Teilnehmer (PN) zwischen den unterschiedlichen Teilnehmerterminals organsisiert ist, wobei der zentrale Prozessor außerdem die Übertragung eines Steuerkodes (MC) an alle Terminals (100) steuert, und daß jedes Teilnehmerterminal auch einen numerischen Umschalter (27), welcher von einer Spracherkennungsschaltung (22) gesteuert ist, welche den Träger der Telefonsignale durch die Teilnehmerstimme aktiviert und welche das modulierte Signal während der Intervallpausen der Botschaften unterbricht, und eine Vorrichtung zur Erfassung und zur Verfolgung des Kodes (11, 12) umfaßt, um den Steuerkode (MC) zu empfangen und einen Kodegenerator (13) zu steuern, um eine Wiedergabe des für die Verbindung verwendeten Teilnehmerkodes (PN) zu erzeugen.

4. System nach Anspruch 3, dadurch gekennzeichnet, daß jedes Teilnehmerterminal (100) einen Sprachprozessor (21) zum Komprimieren der Teilnehmerstimme und zur Unterteilung in zwei vorgegebene Richtwertströme entsprechend dem hierarchischen Prinzip der Kodierung umfaßt.

## Claims

1. Method for measuring the synchronisation between a user terminal and a master station in a multiple-access, coded distribution satellite communications system with a carrier activated by the voice of the terminal user, characterised in that synchronisation in the outgoing link is obtained by the transmission of a master code (MC) without interruption from the master station with a higher power than that of the signals in the return link, the master code (MC) being transmitted with the same clock frequency and the same carrier as the communication signals, and in that synchronisation in the return link is obtained by the transmission of a signal from the user terminal during the pauses in the user's voice, the synchronisation signal being transmitted by forced activation of the transmission carrier when a pause exceeds a predetermined time lapse, said forced activation of the carrier being controlled by a user code (PN) deduced by decoding the master code (MC) received from the master station.

2. Method according to claim 1, characterised in that the user's voice is compressed by a voice processor (21) and subdivided into two data flows in accordance with the hierarchical coding principle.

3. Multiple-access, coded-distribution satellite communications system, including a centralised earth master station (200) and user terminals (100), said terminals including modulation (26) and demodulation (16) circuits, characterised in that the centralised master station (200) includes a central processor (40) organised to manage distribution of the user codes (PN) between the different user terminals, said central processor further controlling the transmission of a master code (MC) to all terminals (100), and in that each user terminal also includes a digital switch (27) controlled by a voice recognition circuit (22) which activates the carrier of the telephone signals by the user's voice and which interrupts the modulated signal during the pause intervals of the message and a code acquisition and tracking device (11, 12) for receiving the master code (MC) and controlling a code generator (13) to produce a replica of the user code (PN) used for the link.

4. System according to claim 3, characterised in that each user terminal (100) includes a voice processor (21) for compressing the user's voice and subdividing it into two data flows in accordance with the hierarchical coding principle.
